# EUROPÄISCHE PATENTSCHRIFT

(11) **EP 3 235 764 B1**
(45) Veröffentlichungstag und Bekanntmachung des Hinweises auf die Patenterteilung: **29.06.2022**
(21) Anmeldenummer: 16000871.0
(22) Anmeldetag: 18.04.2016
(51) Int. Cl.: B65G 43/08

(54) **VERFAHREN UND VORRICHTUNG ZUM SYNCHRONISIERTEN EINSCHLEUSEN VON STÜCKGUTTEILEN AUF EINEN SORTIERFÖRDERER**
METHOD AND APPARATUS FOR SYNCHRONIZED FEEDING OF ARTICLES ONTO A SORTING CONVEYOR
PROCEDE ET DISPOSITIF DESTINES A EVACUER DE MANIERE SYNCHRONISEE DES MATERIAUX EN VRAC SUR UN CONVOYEUR DE TRI

(43) Veröffentlichungstag der Anmeldung: 25.10.2017
(73) Patentinhaber: BEUMER Group GmbH & Co. KG, 59269 Beckum (DE)
(72) Erfinder: Vogelsang, Markus, 59469 Ense-Bremen (DE); Feldmann, Thomas, 59269 Beckum (DE)
(74) Vertreter: Philipp, Matthias

(56) Entgegenhaltungen:
- WO-A1-03/104116
- DE-T2- 60 204 128

## Beschreibung

Die Erfindung betrifft ein Verfahren zum synchronisierten Einschleusen von Stückgutteilen auf einen jeweiligen Aufnahmeplatz eines Sortierförderers, wobei der Sortierförderer Fördereinheiten mit jeweils mindestens einem Aufnahmeplatz für ein Stückgutteil aufweist, die mit einer vorbestimmten Fördergeschwindigkeit vor einer Synchronisationsfördereinrichtung vorbeilaufen, und wobei die Synchronisationsfördereinrichtung einen Synchronisationsförderer, einen an den Synchronisationsförderer anschließenden Einschleusförderer und Mittel zum Erfassen eines einzuschleusenden Stückgutteils auf der Synchronisationsfördereinrichtung aufweist, und wobei dann, wenn ein Fehlerzustand eines Stückgutteils auf der Synchronisationsfördereinrichtung erkannt wird, der Förderer, Synchronisierungs- oder Einschleusförderer, auf dem sich das Stückgutteil befindet, angehalten wird und dann der von dem Stückgutteil belegte Förderer rückwärts bewegt wird, für eine bestimmte Wegstrecke, die über eine Wegeverfolgung gesteuert wird. Die Erfindung betrifft weiterhin eine Sortiervorrichtung mit einem Sortierförderer und einer Synchronisationsfördereinrichtung zur Durchführung des Verfahrens.

Beim weitestgehend automatisierten Einschleusen von Stückgutteilen auf einen Sortierförderer, der mit bewegten Fördereinheiten und Lastaufnahmemitteln wie etwa Kippschalen oder Quergurtbändem versehen ist, kann es bei Stückgutteilen, die in unterschiedlichster Weise ausgebildet sein können, gelegentlich zu einer Störung kommen, wobei ein Stückgutteil beispielsweise unerwartet sensorisch neu erfasst wird oder es eine ungünstige bzw. fehlerhafte Lage oder Orientierung besitzt, aus der heraus es nicht zuverlässig eingeschleust werden kann. In solchen Fällen muss entweder manuell eingegriffen werden, oder aber die Einschleusbewegung des Stückgutteils muss umgekehrt werden, um das Stückgutteil entweder ganz aus dem Einschleusvorgang herauszunehmen oder aber den Einschleusvorgang mit einer korrekten Lage des Stückgutteils erneut einzuleiten.

Aus der WO2015/052144 A1 ist eine Vorgehensweise bekannt, bei der ein instabiles oder in unerwünschter Weise ins Rollen gekommenes Stückgutteil durch Rückwärtsbewegung eines Zuförderbands aus dem Einschleusvorgang entfernt wird.

Aus der DE 602 04 128 T2 ist ein Verfahren zum synchronisierten Einschleusen von Stückgutteilen nach dem Oberbegriff des Anspruchs 1 bekannt, bei dem mit Hilfe von Lichtschranken eine fehlerhafte Lage eines Stückgutteils erkannt wird und in einem solchen Fall der Synchronisationsförderer und Einschleusförderer angehalten und rückwärtsbewegt werden, bis über eine Ausgangserfassungszelle hinaus, wobei die Rückwärtsbewegung während einer vorbestimmten Zeit aufrechterhalten wird. Wenn eine bestimmte Ausgangsposition des Stückgutteils erreicht werden soll, setzt eine solche Vorgehensweise voraus, dass die Rückwärtsbewegung mit einer ganz bestimmten Geschwindigkeit erfolgt, damit der Betrieb während einer vorbestimmten Zeit zu einem vorbestimmten Weg führt. Dies kann nicht immer gewährleistet werden. Außerdem setzt die bekannte Vorgehensweise die Anordnung und Abtastung einer Lichtschranke an einer ganz bestimmten Position voraus.

Die Aufgabe der Erfindung besteht darin, ein gattungsgemäßes Verfahren dahingehend zu verbessern, dass bei der Rückwärtsbewegung des beispielsweise als in einer fehlerhaften Lage erkannten Stückgutteils mit beliebig vorgebbaren Geschwindigkeiten gearbeitet werden kann, ohne auf Lichtschranken und ohne auf zeitliche Abhängigkeiten angewiesen zu sein, wodurch Störungen weitestgehend vermieden werden können und die Flexibilität und Effektivität des Verfahrens gesteigert werden kann. Dadurch können manuelle Eingriffe vermieden oder reduziert werden und der Durchsatz des Sortierförderers kann erhöht werden.

In einer fehlerhaften Lage erkannte Stückgutteile können Stückgutteile sein, deren Existenz bereits bekannt ist, aber deren Lage oder Orientierung sich plötzlich verändert hat, oder Stückgutteile, die plötzlich unerwartet auf der Einschleusung sensorisch erkannt werden, oder aber auch Stückgutteile, die nach einem Nothalt sicher eingeschleust werden sollen.

Erfindungsgemäß wird ein Verfahren nach Anspruch 1 vorgeschlagen.

Die Rückwärtsbewegung des von dem als fehlerbehaftet erkannten Stückgutteil belegten Förderers erfolgt über eine Wegeverfolgung, wobei die Bewegung des Förderers und/oder unmittelbar die Bewegung des Stückgutteils verfolgt werden kann. Wenn die Bewegung des Förderers verfolgt wird, kann dies insbesondere über Inkrementalgeber erfolgen. Wenn der Weg des Stückgutteils verfolgt wird, kann dies beispielsweise über eine optische Erkennung mittels Lichtschranke oder Kamera mit Bildverarbeitung erfolgen, oder durch Laserscanner oder laserbasierte Scanner. Beide Vorgehensweisen können kombiniert werden, wobei die Bewegung des Förderers und die des Stückgutteils unabhängig voneinander verfolgt werden können.

Erfindungsgemäß wird über Inkrementalgeberimpulse der Synchronisationsfördereinrichtung die zurückgelegte Wegstrecke der Synchronisationsfördereinrichtung während der Rückwärtsbewegung erfasst und gesteuert, so dass das als in einem Fehlerzustand erkannte, beispielsweise in fehlerhafter Lage erkannte Stückgutteil, ohne dass irgendwelche Lichtschranken abgefragt werden müssen, und ohne dass die Synchronisationsfördereinrichtung mit einer vorgegebenen Geschwindigkeit und während einer vorgegebenen Zeitdauer betrieben werden muss, in eine insbesondere für jeden expliziten Fehlerfall neu vorbestimmte Ausgangsposition transportiert werden kann.

Zusätzlich zu der vorgenannten wegstreckenbezogenen Steuerung kann vorgesehen sein, dass eine Geschwindigkeit, Position, Orientierung oder Lage (liegt zu weit außerhalb der Mittellinie der Synchronisationsfördereinrichtung) eines Stückgutteils auf der Synchronisationsfördereinrichtung durch eine oder mehrere Lichtschranken erfasst wird, die im Bereich des Einschleusförderers und/oder im Bereich des Synchronisationsförderers und/oder im Bereich des Zuförderers angeordnet sein können. Es besteht die Möglichkeit, dass ein Fehlerzustand wie eine fehlerhafte Lage eines Stückgutteils auf der Synchronisationsfördereinrichtung durch eine oder mehrere Lichtschranken erfasst wird.

Die Erfindung bezieht sich weiterhin auf eine Sortiervorrichtung gemäß dem Gegenstand des Anspruchs 6.

Die Wegeverfolgungseinrichtung kann zur Erfassung eines zurückgelegten Wegs des von dem fehlerbehafteten Stückgutteil belegten Förderers und ggf. des Zuförderers eingerichtet sein, und/oder unmittelbar zur Erfassung des von dem Stückgutteil zurückgelegten Wegs. Die Wegeverfolgungseinrichtung arbeitet zweckmäßigerweise zeitunabhängig.

Es kann vorgesehen sein, dass die Synchronisationsfördereinrichtung mindestens eine mit der Steuerung verbundene Lichtschranke aufweist, mit der eine Position, Geschwindigkeit und/oder eine korrekte oder fehlerhafte Orientierung bzw. Lage eines Stückgutteils auf der Synchronisationsfördereinrichtung erfassbar ist.

Die Steuerung kann zum Erfassen von wegstreckenbezogenen Impulsen eines Inkrementalgebers des Synchronisationsförderers eingerichtet sein. Alternativ oder zusätzlich kann die Steuerung zum Erfassen von wegstreckenbezogenen Impulsen eines Inkrementalgebers des Einschleusförderers eingerichtet sein.

Die Synchronisationsfördereinrichtung kann einen dem Synchronisationsförderer vorgeordneten Zuförderer aufweisen. Der Zuförderer kann mehrere in Reihe angeordnete, von der Steuerung unabhängig voneinander steuerbare Einzelförderer umfassen. Mehrere Einzelförderer können beispielsweise mit unterschiedlichen Geschwindigkeiten betrieben werden, wodurch ein gegenseitiger Abstand von benachbarten Stückgutteilen vergrößert oder verkleinert werden kann.

Es kann vorgesehen sein, dass im Bereich des Zuförderers mindestens eine mit der Steuerung verbundene Lichtschranke zur Erfassung eines Stückgutteils, insbesondere von dessen Position, Lage oder Geschwindigkeit, angeordnet ist.

Die Erfindung wird nachfolgend anhand eines Ausführungsbeispiels erläutert, wobei auf eine Zeichnung Bezug genommen ist, in der
Fig. 1 eine schematische Draufsicht auf eine erfindungsgemäße Sortiervorrichtung mit einem Sortierförderer und einer Synchronisationsfördereinrichtung zeigt,
Fig. 2a - d eine Erfassung eines fehlerhaften Teils und dessen Zurückbewegung bis zu einer Ausgangsposition zeigt.

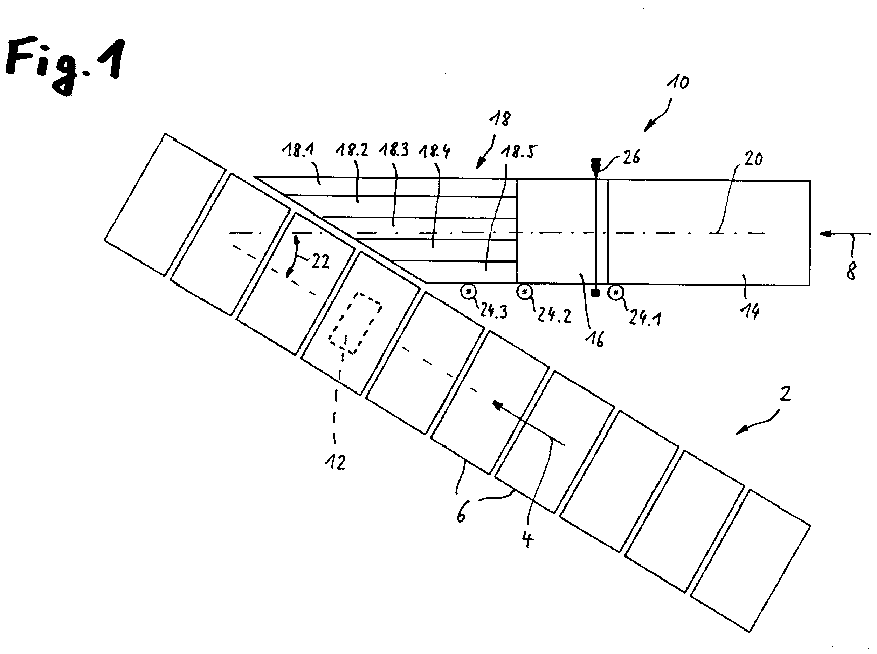

Fig. 1 zeigt in einer schematischen Draufsicht einen Sortierförderer 2 mit entlang einer sich in einer Förderrichtung 4 erstreckenden Förderbahn bewegbaren Fördereinheiten 6, bei denen es sich um Fahrwagen mit darauf gehaltenen Kippschalen, Querbandförderern oder ähnlichen Lastaufnahmemitteln handeln kann, wobei jede Fördereinheit 6 mindestens einen Aufnahmeplatz für ein Stückgutteil aufweist und sich mit einer vorbestimmten Fördergeschwindigkeit in Förderrichtung 4 bewegt. Unmittelbar benachbart zu dem Sortierförderer 2 ist eine Synchronisationsfördereinrichtung 10 angeordnet, die dazu dient, auf den Sortierförderer 2 aufzugebende Stückgutteile in einer Einschleusrichtung 8 mit einer Bewegungskomponente in Förderrichtung 4 zu beaufschlagen und möglichst schonend, d.h. mit möglichst geringer Relativgeschwindigkeit, auf einen freien Aufnahmeplatz 12 einer Fördereinheit 6 einzuschleusen.

Die Synchronisationsfördereinrichtung 10 besteht in dem dargestellten Beispiel aus einem Zuförderer 14, einem an diesen anschließenden Synchronisationsförderer 16 und einem an diesen anschließenden und unmittelbar benachbart zu dem Sortierförderer 2 angeordneten Einschleusförderer 18. Zuförderer 14, Synchronisationsförderer 16 und Einschleusförderer 18 sind in einer gemeinsamen Längsrichtung 20 angeordnet, die unter einem spitzen Winkel 22 zu der Förderrichtung 4 des Sortierförderers 2 angeordnet ist. Dieser Winkel muss nicht zwingend spitz sein. Der Einschleusförderer 18 kann aus einer Reihe parallel nebeneinander angeordneten Einzelförderern oder Bandförderern 18.1, 18.2 ... 18.5 bestehen, die eine unterschiedliche Länge aufweisen, damit der Einschleusförderer 18 mit einem möglichst geringen Zwischenraum an die Fördereinheiten 6 anschließt. Der Einschleusförderer 18 weist damit insgesamt eine näherungsweise trapezförmige Grundrissform auf. Bedarfsweise kann vorgesehen sein, dass die den Einschleusförderer 18 bildenden Einzelförderer mit unterschiedlichen Geschwindigkeiten angetrieben werden können, um ein darauf befindliches Stückgutteil bedarfsweise um eine vertikal zur Förderebene des Einschleusförderers 18 angeordnete Achse zu drehen und in einer optimalen Ausrichtung auf den Sortierförderer 2 zu übergeben.

In dem dargestellten Ausführungsbeispiel sind sämtliche Förderer der Synchronisationsfördereinrichtung 10 als Bandförderer ausgebildet und weisen neben einem von einer Steuerung kontrollierten Antrieb jeweils einen Inkrementalgeber auf, der wegstreckenbezogene Impulse an die Steuerung abgibt. Der Zuförderer 14 weist einen Inkrementalgeber 24.1 auf, der Synchronisationsförderer 16 einen Inkrementalgeber 24.2 und der Einschleusförderer 18 einen Inkrementalgeber 24.3 auf, die jeweils wegstreckenbezogene Impulse erzeugen, beispielsweise einen Impuls je 1 mm oder 1 cm Wegstrecke oder Transportstrecke des jeweiligen Förderers. Wenn der Einschleusförderer wie oben erwähnt aus mehreren Einzelförderern besteht, können ein Summen-Impulsgeber oder entsprechende Einzelimpulsgeber vorgesehen sein. Auf der Grundlage dieser an die Steuerung übermittelten Impulse ist die Förderbewegung jedes einzelnen Förderers der Synchronisationsfördereinrichtung 10 exakt nachvollziehbar, und damit auch eine Wegstrecke, über die ein Stückgutteil bewegt wird. Die Inkrementalgeber können entweder unmittelbar mit einem Antriebsmotor des jeweiligen Förderers gekoppelt sein oder durch den Motor selbst gebildet sein, beispielsweise im Falle eines Schrittmotors, oder es kann ein eigenständiger Geber mit dem Fördergurt oder einer Umlenkrolle des jeweiligen Förderers gekoppelt sein.

In dem dargestellten Ausführungsbeispiel ist zur Positionserfassung eines zuzuführenden Stückgutteils eine Lichtschranke 26 im Bereich des Synchronisationsförderers 16 angeordnet, deren Abtastebene quer zur Längsachse 20 des Synchronisationsförderers 16 verläuft.

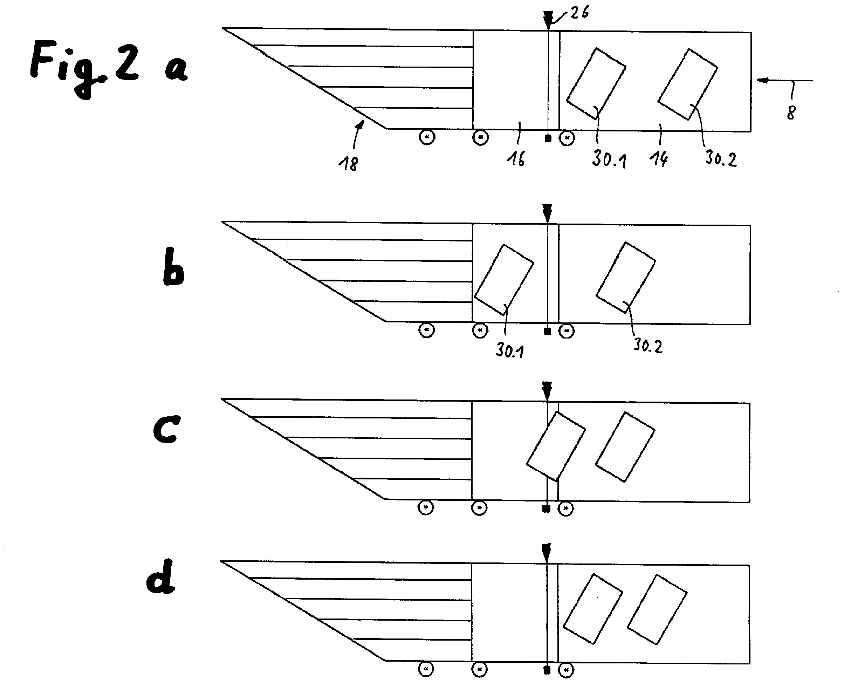

Fig. 2a bis d erläutern die Erkennung einer fehlerhaften Lage eines zuzuführenden Stückgutteils und dessen anschließende Zurückbewegung bis in eine vorbestimmte Ausgangsposition.

Fig. 2a zeigt einen Einschleusvorgang mit einem ersten Stückgutteil 30.1 und einem nachfolgenden, zweiten Stückgutteil 30.2, die in der Einschleusrichtung 8 auf dem Zuförderer 14 in Richtung des Synchronisationsförderers 16 transportiert werden. Das erste Stückgutteil 30.1 befindet sich unmittelbar vor einem vorderen Ende des Zuförderers 14, im Bereich eines Übergangs zwischen Zuförderer 14 und Synchronisationsförderer 16, und auch unmittelbar vor der Lichtschranke 26, die sich an einem bezüglich der Einschleusrichtung 8 hinteren Ende des Synchronisationsförderers 16 befindet.

Fig. 2b zeigt den Einschleusvorgang eine Zeitspanne nach der Situation gemäß Fig. 2a, wobei sich das erste Stückgutteil 30.1 vollständig durch die Lichtschranke 26 hindurchbewegt hat und sich auf dem Synchronisationsförderer 16 befindet. Der Synchronisationsförderer 16 wird in dem dargestellten Beispiel mit einer größeren Geschwindigkeit als der Zuförderer 14 betrieben, so dass sich der Abstand zweier Stückgutteile, von denen sich eines auf dem Zuförderer 14 und ein anderes bereits auf dem Synchronisationsförderer 16 befindet, vergrößert, wie dies ein Vergleich zwischen Fig. 2b und Fig. 2a zeigt. Alternativ kann der Synchronisationsförderer mit gleicher Geschwindigkeit wie der Zuförderer betrieben werden.

Wenn eine Auswertung eines oder mehrerer Parameter ergibt, dass das auf dem Synchronisationsförderer 16 oder dem Einschleusförderer befindliche erste Stückgutteil 30.1 nicht problemlos eingeschleust werden kann, was beispielsweise an einer fehlerhaften Lage, Position relativ zur Längsachse (Mittellinie) 20 oder Orientierung (Ausrichtung relativ zur Einschleusrichtung 8) des ersten Stückgutteils 30.1, dessen unzureichender Geschwindigkeit oder einem falschen Timing in Bezug auf einen freien Aufnahmeplatz auf dem Sortierförderer liegen kann, werden der Synchronisationsförderer und der Einschleusförderer angehalten und dann rückwärts entgegen der Einschleusrichtung 8 bewegt, bis sich das erste Stückgutteil 30.1 in einer für diesen Fehlerfall vorbestimmten Ausgangsposition befindet. Die vorbestimmte Ausgangsposition kann eine Position auf dem Zuförderer 14 oder auf dem Synchronisationsförderer 16 sein.

Fig. 2c zeigt den Einschleusvorgang nach Ausführung der vorgenannten Rückwärtsbewegung des Synchronisationsförderers 16, wobei sich das erste Stückgutteil 30.1 im Bereich des Übergangs zwischen Synchronisationsförderer 16 und Zuförderer 14 und auch im Bereich der Lichtschranke 26 befindet. In dem dargestellten Beispiel ist während der Rückwärtsbewegung des Synchronisationsförderers 16 der Zuförderer 14 angehalten worden, so dass sich der Abstand zwischen dem ersten Stückgutteil 30.1 und dem noch auf dem Zuförderer 14 befindlichen zweiten Stückgutteil 30.2 verkleinert hat. Sobald das erste Stückgutteil 30.1 in den Bereich des Zuförderers 14 gelangt, also ab dem in Fig. 2c dargestellten Zustand, wird der Zuförderer 14 rückwärts (entgegen der Einschleusrichtung 8) bewegt, so dass sich nicht nur das als nicht problemlos einzuschleusend erkannte erste Stückgutteil 30.1, sondern auch das zweite Stückgutteil 30.2 und, falls vorhanden, alle weiteren auf dem Zuförderer 14 befindlichen Stückgutteile rückwärts bewegt werden. Diese Rückwärtsbewegung wird solange ausgeführt, bis sich das erste Stückgutteil 30.1 in einer vorbestimmten Ausgangsposition befindet, aus der heraus eine problemlose erneute Einschleusung möglich ist.

Die Rückwärtsbewegung der verschiedenen Förderer (Einschleusförderer, Synchronisationsförderer und Zuförderer), die an der Zurückbewegung des erneut einzuschleusenden Stückgutteils 30.1 bis zu der vorbestimmten Ausgangsposition beteiligt sind, wird nicht über Lichtschranken, sondern ausschließlich durch wegstreckenbezogene Impulse der in diesem Beispiel verwendeten Inkrementalgeber 24.1, 24.2, 24.3 zeitunabhängig gesteuert. Soweit Lichtschranken vorgesehen sind, wie insbesondere die Lichtschranke 26, dienen diese der Erfassung von Parametern wie Lage, Orientierung, Geschwindigkeit und Position von Stückgutteilen während der Vorwärtsbewegung im Rahmen des Einschleusprozesses.

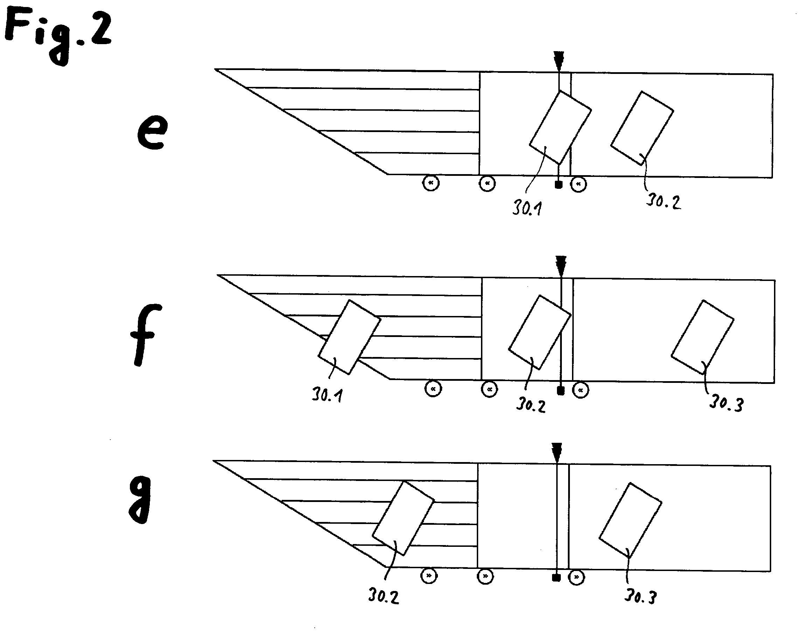

Im Anschluss an die Zurückbewegung des erneut einzuschleusenden Stückgutteils 30.1 auf eine vorbestimmte Ausgangsposition gemäß Fig. 2d wird der erneute Einschleusvorgang ausgeführt, der für das Stückgutteil 30.1 in Fig. 2e und 2f dargestellt ist. Nach dem erneuten Übergang des ersten Stückgutteils 30.1 von dem Zuförderer 14 auf den Synchronisationsförderer 16 (Fig. 2e) und Erfassung durch die Lichtschranke 26 gelangt das Stückgutteil 30.1 auf den Einschleusförderer 18 (Fig. 2f) und von dort auf einen bestimmten Aufnahmeplatz 12 des Sortierförderers 2.

Fig. 2g zeigt den Einschleusvorgang des zweiten Stückgutteils 30.2, wobei sich dieses bereits auf dem Einschleusförderer 18 befindet, und zeigt ebenso wie Fig. 2f ein weiteres Stückgutteil 30.3, das sich noch auf dem Zuförderer 14 befindet.

### Bezugszeichenliste

- 2: Sortierförderer
- 4: Förderrichtung
- 6: Fördereinheit
- 8: Einschleusrichtung
- 10: Synchronisationsfördereinrichtung
- 12: Aufnahmeplatz
- 14: Zuförderer
- 16: Synchronisationsförderer
- 18: Einschleusförderer
- 18.1, 18.2 ... 18.5: Einzelförderer
- 20: Längsachse
- 22: Winkel
- 24.1, 24.2, 24.3: Inkrementalgeber
- 26: Lichtschranke
- 30.1: erstes Stückgutteil
- 30.2: zweites Stückgutteil
- 30.3: drittes Stückgutteil

## Patentansprüche

1. Verfahren zum synchronisierten Einschleusen von Stückgutteilen (30.1, 30.2) auf einen jeweiligen Aufnahmeplatz (12) eines Sortierförderers (2), wobei der Sortierförderer (2) Fördereinheiten (6) mit jeweils mindestens einem Aufnahmeplatz (12) für Stückgutteile (30.1, 30.2) aufweist, die mit einer vorbestimmten Fördergeschwindigkeit vor einer Synchronisationsfördereinrichtung (10) vorbeilaufen, wobei die Synchronisationsfördereinrichtung (10) einen Synchronisationsförderer (16), einen an den Synchronisationsförderer (16) anschließenden Einschleusförderer (18) und Mittel (26) zum Erfassen eines einzuschleusenden Stückgutteils (30.1, 30.2) auf der Synchronisationsfördereinrichtung (10) aufweist, und wobei dann, wenn ein Fehlerzustand eines Stückgutteils (30.1) auf der Synchronisationsfördereinrichtung (10) erkannt wird, der Förderer, Synchronisierungs- oder Einschleusförderer, auf dem sich das Stückgutteil befindet, angehalten wird und dann der von dem Stückgutteil belegte Förderer rückwärts bewegt wird, für eine bestimmte Wegstrecke, die über eine Wegeverfolgung gesteuert wird, **dadurch gekennzeichnet, dass** die Rückwärtsbewegung über eine bestimmte Wegstrecke zeitlich unabhängig gesteuert wird, d. h. ausschließlich über die Verfolgung des zurückgelegten Wegs des Förderers und/oder des Stückgutteils, bis sich das als fehlerbehaftet erkannte Stückgutteil (30.1) in einer vorbestimmten Ausgangsposition befindet, die für jeden einzelnen auftretenden Fehlerfall individuell vorbestimmt wird, und der Synchronisationsförderer (16) und der Einschleusförderer (18) vorwärts bewegt werden, um das Stückgutteil (30.1) auf einen bestimmten Aufnahmeplatz (12) des Sortierförderers (2) einzuschleusen, wobei die bestimmte Wegstrecke über wegstreckenbezogene Impulse eines Inkrementalgebers (24.2) des Synchronisationsförderers (16) und/oder über wegstreckenbezogene Impulse eines Inkrementalgebers (24, 30) des Einschleusförderers (18) und/oder über wegstreckenbezogene Impulse eines Inkrementalgebers (24.1) eines dem Synchronisationsförderer (16) vorgeschalteten Zuförderers (14) gesteuert wird.

2. Verfahren nach Anspruch 1, **dadurch gekennzeichnet, dass** eine Lage, Orientierung, Geschwindigkeit oder Position eines Stückgutteils (30.1) auf der Synchronisationseinrichtung (10) durch eine oder mehrere sensorische Einrichtungen (26) erfasst wird.

3. Verfahren nach Anspruch 1 oder 2, **dadurch gekennzeichnet, dass** ein Fehlerzustand wie eine fehlerhafte Lage, Orientierung oder Geschwindigkeit eines Stückgutteils (30.1) durch eine oder mehrere sensorische Einrichtungen (26) erfasst wird.

4. Verfahren nach Anspruch 1, **dadurch gekennzeichnet, dass** die bestimmte Wegstrecke durch eine unmittelbare Wegeverfolgung des als fehlerbehaftet erkannten Stückgutteils (30.1) gesteuert wird.

5. Verfahren nach Anspruch 4, **dadurch gekennzeichnet, dass** die Wegeverfolgung mittels sensorischer Einrichtungen wie Lichtschranken, Lichttasten, Kamera mit Bildauswertung, Ultraschall - oder Gewichtssensoren erfolgt.

6. Sortiervorrichtung mit einer Synchronisationsfördereinrichtung (10) und einem Sortierförderer (2) mit entlang einer Förderbahn bewegten Fördereinheiten (6), die jeweils mindestens einen Aufnahmeplatz (12) für Stückgutteile (30.1, 30.2) aufweisen und mit einer vorbestimmten Fördergeschwindigkeit vor der Synchronisationsfördereinrichtung (10) vorbeilaufen, wobei die Synchronisationsfördereinrichtung (10) einen Synchronisationsförderer (16), einen an den Synchronisationsförderer (16) anschließenden Einschleusförderer (18) und Mittel (26) zum Erfassen eines einzuschleusenden Stückgutteils (30.1, 30.2) auf der Synchronisationsfördereinrichtung (10) aufweist, und mit einer mit der Synchronisationsfördereinrichtung (10) verbundenen Steuerung, die zum Erfassen von wegstreckenbezogenen Impulsen eines Inkrementalgebers (24.2) des Synchronisationsförderers (16) und/oder zum Erfassen von wegstreckenbezogenen Impulsen eines Inkrementalgebers (24.3) des Einschleusförderers (18) und/ oder zum Erfassen von wegstreckenbezogenen Impulsen eines Inkrementalgebers (24.1) eines dem Synchronisationsförderer (16) vorgeordneten Zuförderers (14) und zum Durchführen des Verfahrens nach einem der vorangehenden Ansprüche eingerichtet ist.

7. Sortiervorrichtung nach Anspruch 6, **dadurch gekennzeichnet, dass** die Synchronisationsfördereinrichtung (10) mindestens eine mit der Steuerung verbundene sensorische Einrichtung (26) aufweist, mit der ein Stückgutteil (30.1, 30.2), insbesondere dessen Position, Lage, Orientierung oder Geschwindigkeit, auf der Synchronisationsfördereinrichtung (10) erfassbar ist.

8. Sortiervorrichtung nach einem der Ansprüche 6 oder 7, **dadurch gekennzeichnet, dass** der Synchronisationsfördereinrichtung (10) und/oder dem Zuförderer (14) sensorische Einrichtungen wie Lichtschranken, Lichttaster, Kamera mit Bildauswertung, Ultraschall- oder Gewichtssensoren zum Erzeugen von wegstreckenbezogenen Signalen oder Informationen eines Stückgutteils (30.1) zugeordnet sind, wobei die Steuerung zum Erfassen von wegstreckenbezogenen Signalen oder Informationen der sensorischen Einrichtungen oder zum Erzeugen von wegstreckenbezogenen Informationen aus den Signalen der sensorischen Einrichtungen eingerichtet ist.

## Claims

1. Method for the synchronised channelling of piece goods items (30.1, 30.2) onto a respective receptacle (12) of a sorting conveyor (2), wherein the sorting conveyor (2) has conveyor units (6) with, in each case, at least one receptacle (12) for piece goods items (30.1, 30.2) which run past a synchronisation conveyor system (10) at a predetermined speed of conveyance, wherein the synchronisation conveyor system (10) has a synchronisation conveyor (16), a channelling conveyor (18) adjoining the synchronisation conveyor (16), and means (26) for detecting a piece goods item (30.1, 30.2) that is to be channelled on the synchronisation conveyor system (10), and wherein whenever an error status of a piece goods item (30.1) on the synchronisation conveyor system (10) is detected, the conveyor, synchronisation conveyor or channelling conveyor on which the piece goods item is located is halted and then the conveyor on which the piece goods item is located is reversed for a specific distance that is controlled via a distance-tracking system,
**characterised in that** the reverse movement over a specific distance is controlled independently of time, i.e. exclusively via the tracking of the distance covered by the conveyor and/or piece goods item, until the piece goods item (30.1) that has been detected as being faulty is located in a predetermined starting in position that is predetermined individually for each individually occurring error event, and the synchronisation conveyor (16) and the channelling conveyor (18) are moved forwards in order to channel the piece goods item (30.1) to a specific receptacle (12) of the sorting conveyor (2), wherein the specific distance is controlled via distance-based pulses from an incremental encoder (24.2) of the synchronisation conveyor (16) and/or via distance-based pulses from an incremental encoder (24, 30) of the channelling conveyor 18) and/or via distance-based pulses from an incremental encoder (24.1) of a feed conveyor (14) upstream of the synchronisation conveyor (16).

2. Method according to claim 1, **characterised in that** a location, orientation, speed or position of a piece goods item (30.1) on the synchronisation system (10) is detected by one or more sensing devices (26).

3. Method according to claim 1 or 2, **characterised in that** an error status such as faulty location, orientation or speed of a piece goods item (30.1) is detected by one or more sensing devices (26).

4. Method according to claim 1, **characterised in that** the specific distance is controlled by direct distance tracking of the piece goods item (30.1) that has been detected as defective.

5. Method according to claim 4, **characterised in that** the distance tracking is carried out by means of sensing devices such as photoelectric barriers, light sensors, cameras with image processing, ultrasound sensors or weight sensors.

6. Sorting device with a synchronisation conveyor system (10) and a sorting conveyor (2) with conveyor units (6) which are moved along a conveyor track and which have, in each case, at least one receptacle (12) for piece goods items (30.1, 30.2) and which run past the synchronisation conveyor system (10) at a predetermined speed of conveyance, wherein the synchronisation conveyor system (10) has a synchronisation conveyor (16), a channelling conveyor (18) adjoining the synchronisation conveyor (16), and means (26) for detecting a piece goods item (30.1, 30.2) that is to be channelled on the synchronisation conveyor system (10), and with a controller which is connected to the synchronisation conveyor system (10) and which is set up to detect distance-based pulses from an incremental encoder (24.2) of the synchronisation conveyor (16) and/or to detect distance-based pulses from an incremental encoder (24.3) of the channelling conveyor (18) and/or to detect distance-based pulses from an incremental encoder (24.1) of a feed conveyor (14) upstream of the synchronisation conveyor (16), and to execute the method according to one of the preceding claims.

7. Sorting device according to claim 6, **characterised in that** the synchronisation conveyor system (10) has at least one sensing device (26) which is connected to the controller, and with which a piece goods item (30.1, 30.2), in particular its position, location, orientation or speed, on the synchronisation conveyor system (10) can be detected.

8. Sorting device according to one of the claims 6 or 7, **characterised in that** assigned to the synchronisation conveyor system (10) and/or the feed conveyor (14) are sensing devices such as photoelectric barriers, light sensors, cameras with image processing, ultrasound sensors or weight sensors, to generate distance-based signals or information for a piece goods item (30.1), wherein the controller is set up to detect distance-based signals or information from the sensing devices or to generate distance-based information from the signals of the sensing devices.

## Revendications

1. Méthode de canalisation synchronisée de marchandises (30.1, 30.2) sur un réceptacle respectif (12) d'une bande de convoyage de tri (2), et cette bande de convoyage de tri (2) a plusieurs unités de convoyage (6) et, dans chaque cas, il y a au moins un réceptacle (12) pour des marchandises (30.1, 30.2) qui circulent devant un système à bande de convoyage de synchronisation (10) à une vitesse prédéterminée d'acheminement, et ce système à bandes de convoyage de synchronisation (10) a une bande de convoyage de synchronisation (16), une bande de convoyage de canalisation (18) à proximité de la bande de convoyage de synchronisation (16), et un dispositif (26) de détection de marchandises (30.1, 30.2) qui doivent être canalisées sur le système à bandes de convoyage de synchronisation (10), et chaque fois qu'un statut d'erreur d'une marchandise (30.1) sur le système à bandes de convoyage de synchronisation (10) est détecté, cette bande de convoyage, la bande de convoyage de synchronisation ou la bande de convoyage de canalisation sur laquelle se trouvent des marchandises est arrêtée puis la bande de convoyage sur laquelle se trouvent des marchandises se déplace dans l'autre sens sur une distance spécifique qui est placée sous le contrôle d'un système de suivi de distance, **se caractérisant par le fait que** ce déplacement dans le sens inverse sur une distance spécifique est contrôlé, indépendamment de la durée, à savoir, exclusivement par le biais du suivi de la distance parcourue par la bande de convoyage et (ou) la marchandise, jusqu'à ce que cette marchandise (30.1), qui a été détectée comme étant défectueuse, est localisée à une position prédéterminée de départ qui est prédéterminée, de manière individuelle, pour chaque événement individuel d'erreur qui se produit, et la bande de convoyage de synchronisation (16) et la bande de convoyage de canalisation (18) sont acheminées vers l'avant afin de canaliser la marchandise (30.1) jusqu'à un réceptacle spécifique (12) de la bande de convoyage de tri (2), et cette distance spécifique est contrôlée par le biais d'une distance-basée sur des impulsions en provenance d'un codeur incrémentiel (24.2) de la bande de convoyage de synchronisation (16) et (ou) par le biais d'une distance-basée sur des impulsions en provenance d'un codeur incrémentiel (24, 30) de la bande de convoyage de canalisation (18) et (ou) par le biais d'une distance-basée sur des impulsions en provenance d'un codeur incrémentiel (24.1) d'une bande de convoyage d'alimentation (14) située en amont de la bande de convoyage de synchronisation (16).

2. La méthode que décrit la revendication 1 et qui se **caractérise par le fait qu'**un emplacement, une orientation, une vitesse ou une position d'une marchandise (30.1) sur le système de synchronisation (10) est détecté par au moins un dispositif de détection (26).

3. La méthode que décrit la revendication 1 ou 2 et qui se **caractérise par le fait qu'**un statut d'erreur (par exemple, une orientation, une vitesse ou un emplacement défectueux d'une marchandise (30.1) est détecté par au moins un dispositif de détection (26).

4. La méthode que décrit la revendication 1 et qui se **caractérise par le fait que** cette distance spécifique est contrôlée par le suivi direct de distance de la marchandise (30.1) qui a été détectée comme étant défectueuse.

5. La méthode que décrit la revendication 4 et qui se **caractérise par le fait que** le suivi de la distance est confié à des dispositifs de détection comme, par exemple, des barrières photoélectriques, des capteurs de lumière, des caméras équipées d'un processeur d'images, des capteurs d'ultrason ou des capteurs de masse.

6. Un dispositif de tri muni d'un système à bandes de convoyage de synchronisation (10) et une bande de convoyage de tri (2) équipée d'unités de convoyage (6) qui se déplacent le long d'une piste de convoyage et qui ont, dans chaque cas, au moins un réceptacle (12) de marchandises (30.1, 30.2) et qui circulent dans le système à bandes de convoyage de synchronisation (10) à une vitesse prédéterminée d'acheminement, et ce système à bandes de convoyage de synchronisation (10) a une bande de convoyage de synchronisation (16), une bande de convoyage de canalisation (18) qui est attenante à la bande de convoyage de synchronisation (16) et des dispositifs (26) de détection d'une marchandise (30.1, 30.2) qui doit être canalisée sur le système à bandes de convoyage de synchronisation (10), et avec un contrôleur qui est raccordé au système à bandes de convoyage de synchronisation (10) et qui est programmé pour détecter des impulsions basées sur une distance à partir d'un codeur incrémentiel (24.2) de la bande de convoyage de synchronisation (16) et (ou) pour détecter des impulsions basées sur une distance à partir d'un codeur incrémentiel (24.3) de la bande de convoyage de canalisation (18) et (ou) pour détecter des impulsions basées sur une distance-à partir d'un codeur incrémentiel (24.1) d'une bande de convoyage d'alimentation (14), en amont de la bande de convoyage de synchronisation (16) et pour exécuter la méthode que décrit l'une ou l'autre des revendications précédentes.

7. Le dispositif de tri que décrit la revendication 6 et qui se **caractérise par le fait que** le système à bandse de convoyage de synchronisation (10) a au moins un dispositif de détection (26) qui est raccordé au contrôleur, et avec lequel une marchandise (30.1, 30.2), en particulier sa position, son emplacement, son orientation ou sa vitesse, sur le système à bandes de convoyage de synchronisation (10) peut être détecté.

8. Le dispositif de tri que décrit la revendication 6 ou 7 et qui se **caractérise par le fait que** des dispositifs de détection comme, par exemple, des barrières photoélectriques, des capteurs de lumière, des caméras avec processeurs d'images, des capteurs d'ultrason ou des capteurs de masse sont affectés au système à bandes de convoyage de synchronisation (10) et (ou) à la bande de convoyage d'alimentation (14), pour créer des signaux basés sur une distance ou des informations pour une marchandise (30.1), et ce contrôleur est programmé pour détecter des signaux basés sur une distance ou des informations en provenance de dispositifs de détection ou pour créer des informations basées sur une distance à partir des signaux provenant des dispositifs de détection.
